# EUROPEAN PATENT APPLICATION

(11) **EP 1 548 640 A2**
(43) Date of publication of application: **29.06.2005**
(21) Application number: 04106523.6
(22) Date of filing: 13.12.2004
(51) Int. Cl.: G06K 19/077

(54) **IC tag with sealing tool**

(30) Priority: 25.12.2003 JP 2003430706
(71) Applicant: ITOCHU CORPORATION, Minato-ku, Tokyo 107-8077 (JP); JAPAN BANO'K CO. LTD., Chiyoda-ku Tokyo (JP)
(72) Inventor: TAMURA, Kenji, Minato-ku, Tokyo (JP); SHUKU, Hiroyuki, Chiyoda-Ku, Tokyo (JP)
(74) Representative: Weber, Dieter, Dr.

(57) **Abstract**

To provide an IC tag 11 permitting to easily attach the IC tag part to an article. An IC tag with a sealing tool wherein it is molded of synthetic resin in one body, and the tag part 11 with an embedded IC chip 12a is connected to the sealing tool 1 provided with a male part 5 having an insertion head part and a female part 6 having an insertion hole 6b to be engaged with the insertion head part 5 at both end parts of filament parts 3, 4, respectively, through a connection part 9 which can be manually separated.

## Description

### FIELD OF THE INVENTION

This invention relates to an IC tag with a sealing tool comprising: a sealing tool provided with a male part having an insertion head part, and a female part having an insertion hole to be engaged with the insertion head part, at both end parts of a straight filament part formed of synthetic resin or a sealing tool which is folded at the midpoint of its length and is shaped like a letter V, narrow interval U or a crutch and is provided at both ends of the filament part with a male part having an insertion head part and a female part having an insertion part to be engaged with this insertion head part, and which permits to easily connect them in a ring form by their being engaged with each other and also permits management of the display tag attached thereto; and an IC tag part connected thereto through a connection part.

### BACKGROUND OF THE INVENTION

For example, a price tag or a label provided with an adhesive layer on the back is pasted on canned foods or sacks enclosing various foods by a labeler. On the other hand, in the cases of articles such as clothes, bags, slippers or the like which cannot be labeled with an adhesive, a price tag, a brand tag, a maker tag, or an explanatory tag for the article (hereafter referred to "the tag(s)") has been sewn on with thread, but this method has been very poor in attaching workability.

Therefore, a filamentous sealing tool synthetic resin molded product has been used. This basic sealing tool is formed by providing a straight filament with a male part having an insertion head part at one end and a female part having an insertion part at the other end to be engaged with this insertion head part, so that the filament part is ring-formed by inserting the male part through the hole of the female part (for example, patent literature 3).

Moreover, as an improvement on this basic sealing tool, a sealing tool in which the filament part is folded in two has been disclosed, this improved sealing tool being provided with a male part at one end and a female part at the other end to be engaged with this male part, the male part side being made to pass through a hole provided in the price tag, brand tag, and explanatory article tag (hereafter called tags), the tags being further linked through a hole in the article or a grip, this male part engaging with the female part (for example, refer to patent literatures 1 and 2 ).
Patent Literature 1: The Japanese Examined Patent Application Publication 1985-36588
Patent Literature 2: The Japanese Examined Patent Application Publication 1989-36631
Patent Literature 3: The Japanese Examined Patent Application Publication 1982-8473

### DISCLOSURE OF THE INVENTION

The sealing tool relating to the invention claimed in patent literature 1 is of that type which is referred to as a sealing tool shaped like a crutch, and the straight filament part being folded in two, small areas of the supporting parts near the male and female parts thereof being connected so as to be disconnected at the time of sale.

Since the filament part of this sealing tool is folded in two, it is easy to make the male part pass through a hole in the tag, and further, since the male part and the female part are connected close to each other by the connection between small areas of their supporting parts, it is also easy to connect the sealing tool in a ring form. Moreover, the sealing tool is able to maintain or hold the tags so that they do not move to the turn-up point of the filament part, hence it is also easy to maintain the position of the tags.

Moreover, the invention as claimed in patent literature 2 provides also a similar crutch-shape sealing tool and contains an improvement in the connection part between the male part and the female part in order to reduce the metallic mold in size, this sealing tool also being characterized as that disclosed by the patent literature 1. Also, the sealing tool as claimed in patent literature 3 presents a basic form of a sealing tool of this kind in which the filament part is made straight, presenting the structure of the engagement part between the male part and the female part in its details.

The sealing tool as claimed in the three patent literatures are characterized in that they can efficiently be manufactured and also in that the sealing action is very easy because the male part has only to be inserted in the female part.

Thereafter when tags are attached to clothes and the clothes are exhibited for sale, these sealing tool are cut off with scissors to remove the tags, these tags having been utilized to perform management throughout the manufacture, storage, and sale of the articles.

In the case of the crutch-shape sealing tool as claimed in patent literatures 1, 2, since tags can be held at the bend part of the filament, the tags are stably positioned and this makes the articles look well when they are exhibited. However, except when throwing away these tags at the time of selling the articles, the action for separating the tags from the cut-off sealing tool is troublesome. Namely, the tags are in the state of being held between the filament parts of the cut sealing tool, and when removing these tags, the sealing tool has to be stretched out of the holes of the tags by holding the tags in one hand and holding the cut sealing tool in the other hand, and so the action is troublesome.

Recently, an IC chip of small dimensions has been developed which is capable of storing a large amount of information, and has been put into practical use as a means for managing indications and prices of, for example, books, CDs, electric appliances, and other articles for large quantity sales.

Although this IC chip is of small type in a form of a small particle, it is able to store a large amount of information, therefore, if the information is used as the management information on the articles, the information can be used for various management from manufacture to sale.
For example, articles and customers can efficiently be managed by directly interweaving, embedding, or incorporating this IC chip and/or an antenna in the articles such as clothes, and utilizing various information stored in the IC chip. Moreover, if "a tag with an IC tag" can be formed by attaching an "inlet" combining an IC chip with an antenna to a sheet of paper or a synthetic resin sheet, and the tag with IC tag can be attached to an article by a separate body of a sealing tool (made of synthetic resin), it is possible to manage the article and the customer efficiently by utilizing the tag with IC after the customer purchases the article. However, the following problems occur when such an "IC chip", "inlet", or "tag with IC" is used.
1) When the IC chip and/or the antenna are directly interwoven, embedded, or incorporated in an article such as clothes, it is possible to collect information of a person who purchases the clothes, therefore, there is a fear of invading privacy. Especially, when the person purchases the clothes using a credit card or the like, personal information can be derived from the credit card information, therefore, the IC chip can be tied with the person, and the problem of invading privacy may be increased more.
2) Normally, a brand tag, on which the names of the manufacturer, sales company, distributor, the brand name, the logo and/or the article name, or the like are printed, is attached to the article. When trying to tie the above-mentioned "IC chip", "inlet", or "tag with IC" onto the article, it may be attempted to modify the existing brand tag by pasting the "inlet" on the back, or tie the "tag with IC" thereon. However, since the brand tag corresponds to, in other words, a "face" of the manufacturer, sales company, or distributor, modification of the brand tag may not be allowed at all.
3) An article is put on sale with an article tag, a price tag, or the like attached thereto as well as the brand tag for indicating the name and the property of the article. Therefore, it can be considered to make a sheet of paper with an "inlet" embedded in the paper layer, and make a brand tag, an article tag, or a price tag by cutting them into a predetermined shape and printing or typing on it. However, when an "inlet" is embedded in a brand tag, an article tag, a price tag, or the like, if misprinting or mistyping should occur on the brand tag or the article, the "inlet" must be scrapped together with them, and these results in a great loss.
4) It is considered to individually tie a "tag with IC" onto an article. Generally, a price tag is removed at the cash desk, but the other tags go to a customer together with the article as they are, therefore, the "tag with IC" also goes to the customer. However, since various kinds of information are stored in the "tag with IC", the information may be passed over to a third party, and this can be a kind of leakage of a business secret.
5) If an IC chip and/or an antenna are woven, embedded, or assembled into an article such as clothes or the like, a manufacturing process is necessary therefor, this causing an increase in manufacturing costs. Also, in order to attach an "IC chip", an "inlet", or a "tag with IC to a brand tag, an attaching process becomes necessary, and increases the costs.
6) Therefore, it can be considered to mold a sealing tool integrally with an "IC chip", an "antenna", an "inlet", or the like in a resin. However, since an "IC chip" is inferior in thermal resistance, the "IC chip" may be damaged by the heat of the molten resin at a high temperature if it is integrally molded in the resin, and the temperature control becomes complex during the manufacturing process. Moreover, since the "IC chip", the "antenna", or the "inlet" differ in shrinkage percentage, ripples are generated to the "antenna" or an antenna part of the "inlet", causing performance degradation of wireless communication. Moreover, if an "IC chip", an "antenna", or an "inlet" is placed in a metallic mold, they are displaced by the injection pressure of the resin, and it may not normally function.

The present invention has been made to solve the problems of the conventional tag, and the sealing tool and the "IC tag part" being integrated in one body through the molding process, being characterized in that the IC tag part is not heated at a certain temperature or higher so as not to lose the function of the main part of this IC tag part.

It is not premised that aforementioned IC tag part is handed over to a customer together with the article as a conventional article tag for indicating the article or a brand tag for indicating the manufacturer and its brand, but is collected at the cash desk to prevent the article information from leaking outside and utilize this article information as that for manufacturing and marketing the article or the related articles.

Moreover, it is an object of the invention to provide a tag with IC of which the IC tag part can easily be manually separated from the sealing tool made of synthetic resin.

The IC tag with a sealing tool according to the present invention to achieve the object is made up as follows.
1) An IC tag with a sealing tool is characterized in that it is integrally molded of synthetic resin, and that a tag part with an embedded IC chip is connected to the sealing tool provided with a male part having an insertion head part and a female part having an insertion hole to be engaged with the insertion head part at both ends of a filament part, respectively, through a connection part which can be manually separated.
2) Aforementioned filament part is characterized by being straight, and the vicinity of the female part is connected to the connection part.
3) An IC tag with a sealing tool is characterized in that it is integrally molded of synthetic resin, and has a bend part and two filament parts of almost the same length extended from both ends of the bend part; a male part having an insertion head part at the end part of one filament part and a female part having a insertion hole to be engaged with the insertion head part at the end part of the other filament part are provided, respectively; and an IC tag part with an embedded IC chip is connected to the bend part which can be manually separated.
4) Aforementioned bend part is characterized by being U-shaped, V-shaped, or round-shaped.
5) Aforementioned connection part is characterized by being torn off by twisting action.
6) Aforementioned connection part is characterized in that it is formed into one or more threads, and the tag part can be separated by twisting action.
7) Aforementioned connection part is characterized in that it is formed like a thin plate, and the IC tag part is connected to the connection part so as to be separable.
8) Aforementioned connection part is characterized in that it is diminished in a part of the cross section, and the IC tag part with an embedded IC can be separated by applying twisting action to this part.

According to the invention as claimed in claim 1, the tags for indicating a manufacturer's name and explaining an article and its materials can easily be attached to the article such as clothes, bags, or the like by using the tags as conventional sealing tool, and further, an IC tag part with an embedded IC chip (a tag which can be handled separately from an ordinary tag, and can be collected) is attached to the sealing tool, therefore, a large amount of information on the manufacture and sale of the article can be stored therein.

When selling this article, the IC tag part attached thereto is simply manually separated from the article and collected. And a large amount of information on the article recorded in the IC tag part is utilized as the data for the manufacture and sale of the next article, and can also be utilized as development data of the related article and the next articles.

According to the invention as claimed in claim 2, the sealing tool having a straight filament and the IC tag part are formed straight, therefore, the tag with IC can easily be put in order.

According to the invention as claimed in claim 3, the sealing tool is V-shaped or shaped like a crutch therefore, the tag with IC can be fixed on an article by very simple action and can easily be put in order.

According to the invention as claimed in claim 4, a tag with IC having a sealing tool of various shapes which are V-shaped or crutch-shaped can be provided.

According to the invention as claimed in claim 5, the sealing tool can be manually disconnected from the IC tag part (plate part) with an embedded IC chip, therefore, it is possible to easily separate the IC tag part from the article and store it.

According to the inventions as claimed in claims 6 to 8, it is possible to provide various forms of connection parts capable of easily separating the sealing tool from the IC tag part by "manual action" such as twisting, tearing off, or folding.

Since the IC tag part separated from the article as mentioned above contains not only very useful important information for a seller such as a manufacturer, a department store, or the like, but also contains a large amount of information such as a selling price, a trade name, a name of a department store where a customer purchased the article, or the like, the separation and collection of the IC tag from the article prevent not only the information on the article but also the follow-up information on a customer who purchased the article, namely, the personal information, from leaking, and are helpful for protection of privacy.

### BRIEF DESCRIPTION OF THE DRAWINGS

Fig.1 is a front view of the IC tag with a sealing tool relating to the first embodiment of the present invention.
Fig.2 is a left side view of Fig.1.
Fig. 3 is a right side view of Fig.1.
Fig.4 is a front view showing the bend part, the IC tag part, and the connection part in Fig.1.
Fig.5 is a side view of Fig.4
Fig.6 is an enlarged view of the IC tag part.
Fig.7 is a front view of the IC tag having the connection part formed of two threadlike bodies relating to the mode of the second embodiment.
Fig.8 is a side view of the IC tag shown in Fig.7.
Fig.9 is a front view showing the bend part, IC tag part, and connection part shown in Fig.7.
Fig.10 is a side view of Fig.9.
Fig.11 is a front view of the thin-plate-shaped connection part relating to the third embodiment.
Fig.12 is a side view of Fig.11.
Fig.13 is a front view of the diminished connection part relating to the fourth embodiment.
Fig.14 is a side view of Fig.13.
Fig. 15 is a front view of the diminished connection part relating to the fifth embodiment.
Fig.16 is a side view of Fig.15.
Fig.17 is a front view of the diminished connection part relating to the sixth embodiment.
Fig.18 is a side view of Fig.17.
Fig.19 is a front view of the diminished connection part on both edges relating to the seventh embodiment.
Fig.20 is a side view of Fig.19.
Fig.21 is a front view of the bell-shaped connection part relating to the eighth embodiment.
Fig.22 is a side view of Fig.21.
Fig.23 is a front view of the beads-shaped connection part relating to the ninth embodiment.
Fig.24 is a side view of Fig.23.
Fig.25 is a front view showing the relationship between the tear-off type of tag and the sealing tool relating to the tenth embodiment.
Fig.26 is a side view of Fig.25.
Fig.27 is a front view showing the relationship between the tear-off type of tag and the sealing tool relating to the eleventh embodiment.
Fig.28 is a side view of Fig.27.
Fig.29 is a front view showing the relationship between the tear-off type of tag and the sealing tool relating to the twelfth embodiment.
Fig.30 is a side view of Fig.29.
Fig.31 is a front view showing the relationship between the tear-off type of tag and the sealing tool relating to the thirteenth embodiment.
Fig.32 is a left side view of Fig.31.
Fig.33 is a right side view of Fig.31.
Fig.34 is a front view showing the tear-off type of tag relating to the fourteenth embodiment.
Fig.35 is a side view of Fig.34.
Fig.36 is a front view showing the tear-off type of tag relating to the fifteenth embodiment.
Fig.37 is a side view of Fig.36.
Fig.38 is a front view of the IC tag with the sealing tool relating to the sixteenth embodiment.
Fig.39 is a right side view of Fig.38.
Fig.40 is a left side view of Fig.38.
Fig.41 is a front view showing the threadlike connection part.
Fig.42 is a side view showing the threadlike connection part.

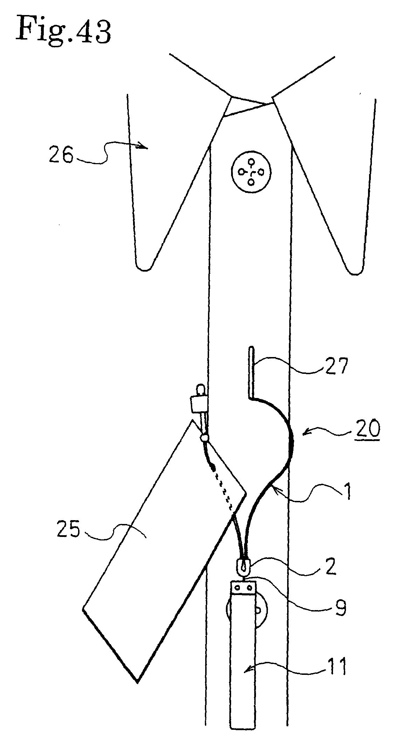

Fig.43 illustrates the state of attaching an article tag to a white shirt as an article using the IC tag.
Fig.44 is an explanatory drawing for showing the state in which the IC tag and the article tag are combined.

### BEST MODE FOR CARRYING OUT THE INVENTION

In the following, the best modes for carrying out the present invention will be explained referring to the drawings.

### (Embodiment 1)

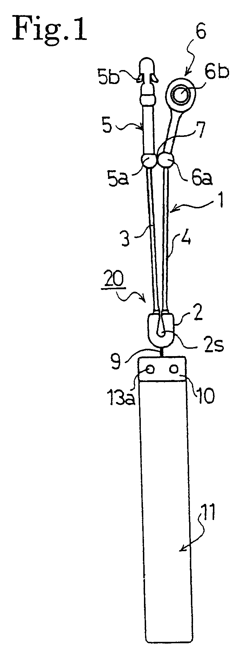

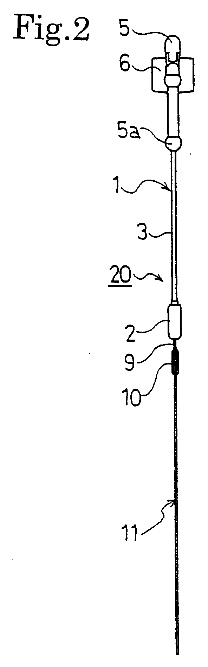

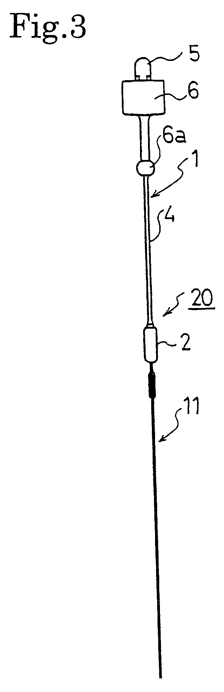

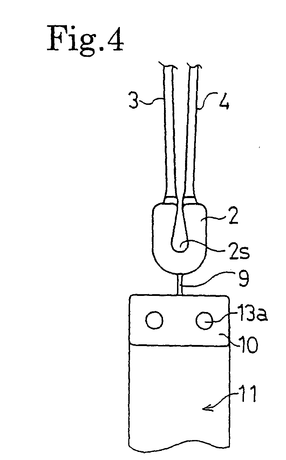

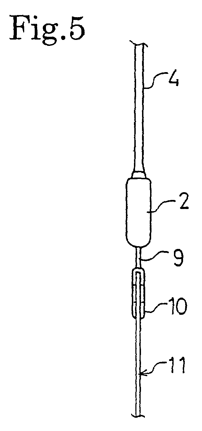

Fig.1 to Fig.6 relate to the first embodiment, wherein Fig.1 is a front view showing the general form of the IC tag with sealing tool relating to the first embodiment; Fig.2 is the left side view; and Fig.3 is the right side view.

The sealing tool 1 which is a component of the IC tag with a sealing tool 20 in this embodiment is forked double with the first filament 3 and the second filament 4 extended almost to the same length starting from the U-shaped or C-shaped bend part 2. And the end part of the first filament 3 is provided with a male part 5 having the insertion head part, and the end part of the second filament 4 is provided with a female part 5 having a insertion hole 6b to be engaged with the insertion head part, respectively.

And two bulbous swollen parts 5a, 6a formed at the root parts of the male part 5 and the female part 6 are connected in one body at a small area contact point 7 so that the male part 5 and the female part 6 are temporarily (the period from manufacture up to use) not separated from each other. However, it is obvious that this connection state may be only easily separable by hand action.

In the process of attaching the tags to goods such as clothes and bags, the filament parts 3, 4 are connected into a ring form by separating the contact point 7 apart by pulling this male part 5 and after inserting it through the hole of the tag, and then putting it further into the insertion hole 6b of the female part 6.

Although detailed descriptions of the structure are omitted here, a plurality of feather-like projection parts 5b (feather part) is formed at the aforementioned head part of the male part 5, and when this male part 5 is inserted through the insertion hole 6b of the female part 6, the projection parts 5b are pressed and contracted by an unillustrated ring-form engaging part formed in the insertion hole 6b, and having passed through this ring-form engaging part, the projection parts 5b expand to the original sizes and are engaged with the ring-form engaging part by being hooked by the hooking face thereof so as not to be stretched out.

Moreover, this embodiment has presented an example in which the projection parts 5b provided on the male part 5 side are engaged with the ring-form engaging part arranged inside the insertion hole 6b provided on the female part 6 side, but the present invention is able to employ other known structures, for example, various kinds of engaging structures which is disclosed by the US Patent Publication No.4,854,014 or the like.

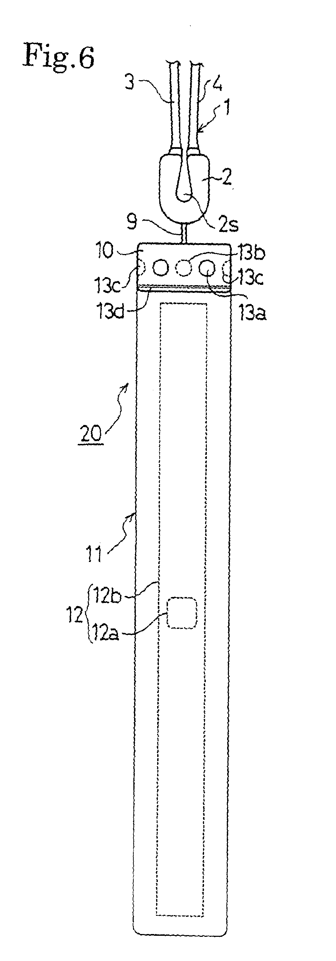

And, a fixing part 10 is connected in one body to the lower end part of aforementioned bend part 2 through "connection part 9" made so as to be cut off, and as shown in Fig.6, an "IC tag part 11" with an embedded IC body 12 (inlet) formed of an IC chip 12a and an antenna 12b is fixed to this fixing part 10.

This fixing part 10 is formed covering both surfaces of the upper end part of the IC tag part 11 in a U-shape, and is further formed with a small hole 13a (a mark of a holding pin) penetrated through to the surface of the end part of this IC tag part 11, and the IC tag part 11 and the sealing tool 1 are formed into one body by the fixing part 10.

Moreover, a structure can be employed which integrates this IC tag part 11 with the sealing tool 1 by forming a small pole through the small hole 13b (Fig.6) penetrated through the end part of the IC tag part 11 and connecting both surfaces of the fixing part 10, and a structure can also be employed which integrates as integrates this IC tag part 11 with the sealing tool 1 by providing the end part of the IC tag part 11 with a concave part and letting the resin 13c flow in that part can also be employed.

This IC tag part 11 is made of paper or synthetic resin and is layered with two sheets, and as shown in Fig.3 (and Fig.6), the IC body 12 is enclosed in the state of being held between the two sheets of paper or synthetic resin sheets (paper, paper and a synthetic resin sheet, two sheets of synthetic resin). The outer surface is planar, therefore, a identification label or a mark can be put on the surface. Moreover, the IC tag part 11 may be pasted on a sheet of paper or a sheet of synthetic resin.

The bend part 2 forming the lower part of the sealing tool 1 takes the forms of a U, V, C, a horseshoe or similar forms in general, and that part forms a holding part 2s (or a positioning part) of tags (what is called tags for goods).

As to the materials for molding in one body from the sealing tool 1 up to the fixing part 10 for fixing the IC tag part 11, synthetic resin (straight thermoplastic resin) such as polypropylene, nylon, or the like having a characteristic of increasing its strength by drawing is used, and the bend part 2, the male 5, the female part 6, the connection part 9, and further up to the fixing part 10 are molded in one body.

As to the first filament 3 and the second filament 4, two types are available. One is a "non-stretch type" where the first filament 3 and the second filament 4 keep their original forms molded, and the other is a "stretch type" where the first filament 3 and the second filament 4 are reduced in diameter by being stretched in length about three times by the stretching method within die moving in one or both using a molded die (divided in two front to rear) and are increased in tensile strength depending on this. Moreover, the ordinary sealing tool 1 is molded by the stretch type method, in which the first filament 3 and the second filament 4 is applied the strength of about 5 to 7 kgf corresponding to a sealing action.

In the IC tag 20 with the sealing tool relating to the present invention, the sealing tool 1 is connected to the IC tag part 11 through the connection part 9. The connection part 9 in this embodiment is formed as a thread, and for example, when a cashier woman selling goods performs "manual action" such as twisting off or tearing off the connection part by fingertips by applying torsion or stretch between the bend part 2 and the fixing part 10, the IC tag part 11 can be separated from the sealing tool 1, and this IC tag part 11 can be collected and utilized.

Tensile strength is not applied to this connection part 9 itself in the case of sealing, and has only to have a function of connecting the IC tag tart 11 to the sealing tool 1 side, and may only be capable of being torn off by twisting or stretching it by hands.

### (Embodiment 2)

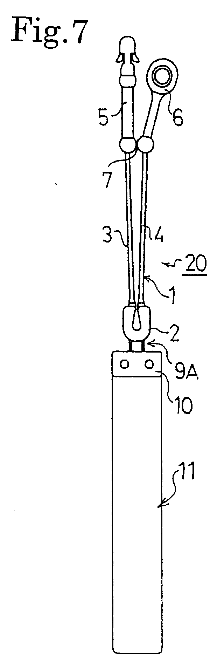

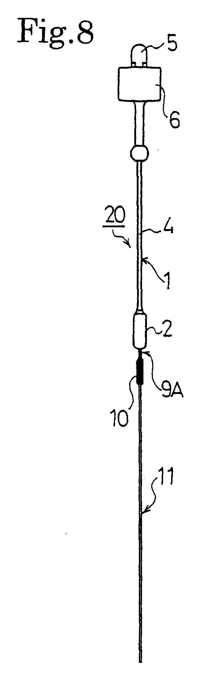

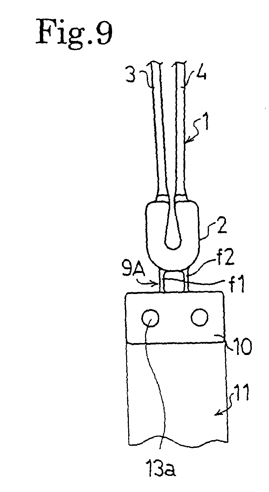

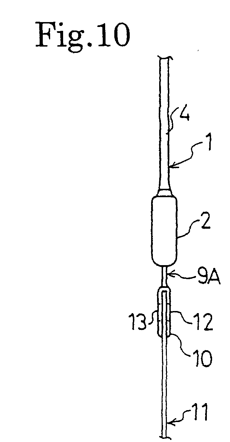

Fig.7 to Fig.10 present the second embodiment, and the connection part 9A in this embodiment comprises two threadlike bodies f1, f2 formed at a space (Fig. 9). The space between the two threadlike bodies f1, f2 and their thickness are determined considering the size of the IC tag part 11 and the design of the whole IC tag 20. In the case of tearing off this connection part 9A, manual action has only to be applied between the bend part 2 and the fixing part 10. Moreover, the shape and size of the IC tag part 11 can properly be designed depending on the size of the IC body 12.

### (Embodiment 3)

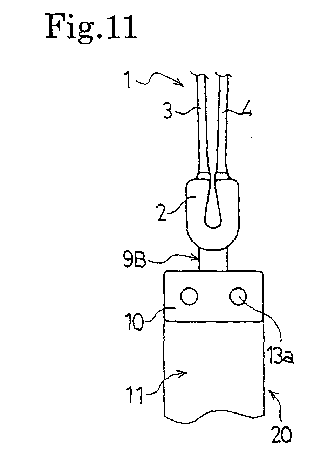

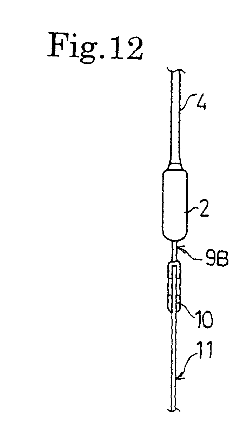

Fig.11 and Fig.12 show the connection part 9B relating to the third embodiment, and this connection part 9B is formed into a thin plate, and this can also be manually torn off with ease, to easily separate the IC tag part 11.

### (Embodiment 4)

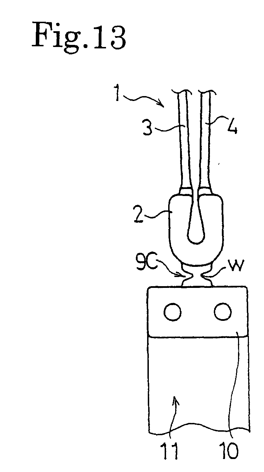

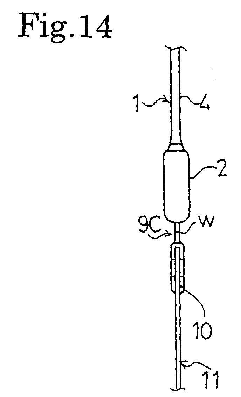

Fig.13 and Fig.14 illustrate the connection part 9C relating to the fourth embodiment, and this connection part 9C is formed in a thin plate, being diminished on both edge parts and slimmed in the middle part, and being torn off easier than that in the embodiment 3, to separate the IC tag part 11.

### (Embodiment 5)

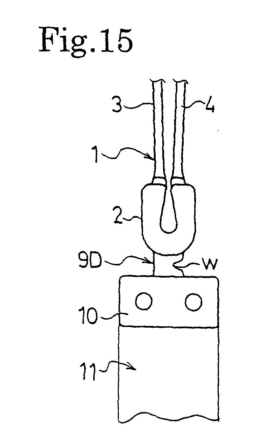

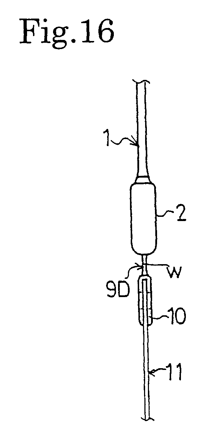

Fig.15 and Fig.16 illustrates the connection part 9D relating to the fifth embodiment, and this connection part 9D is diminished in the right edge part, and the IC tag part 11 can be manually separated.

### (Embodiment 6)

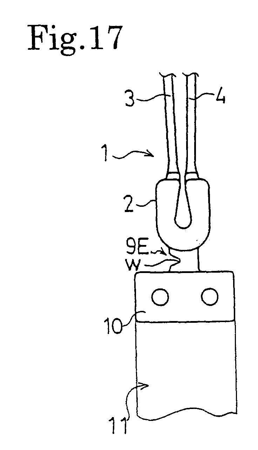

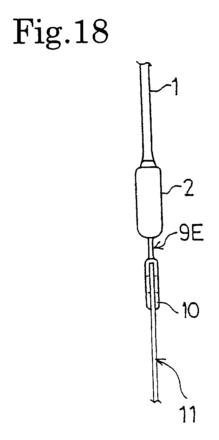

Fig.17 and Fig.18 illustrate the connection part 9E relating to the sixth embodiment, and this connection part 9E is diminished in the opposite direction of the one in the fifth embodiment. There is no functional difference between the connection parts 9D and 9E in the embodiment 5 and 6, and the IC tag part 11 can be easily manually separated by tearing them off.

### (Embodiments 7, 8, 9)

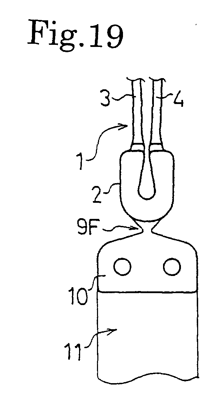

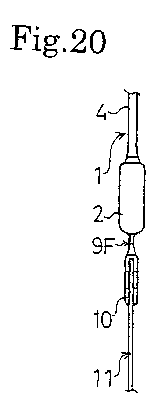

Fig.19 and Fig 20 illustrate the connection part 9F diminished on both sides relating to the embodiment 7, and the upper edge of the fixing part 10 has sloping shoulders and the neck part forms the tear-off connection part.

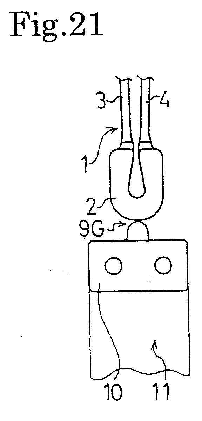

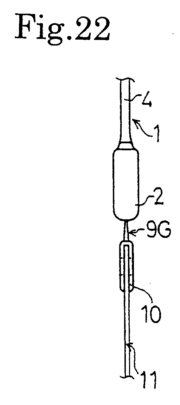

Fig.21 and Fig.22 illustrate the connection part 9G diminished in a bell form relating to the eighth embodiment.

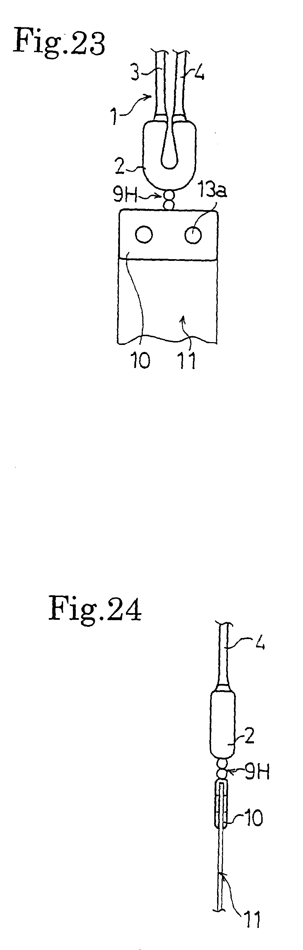

Moreover, Fig.23 and Fig.24 illustrate the connection part 9H connecting two pieces of small balls relating to the embodiment 9. The one according to this embodiment is formed like a kind of beads looks well.

Any of the connection parts 9F, 9G, 9H can easily manually be torn off, and thereby the IC tag part 11 can be separated and stored.

### (Embodiments 10, 11, 12)

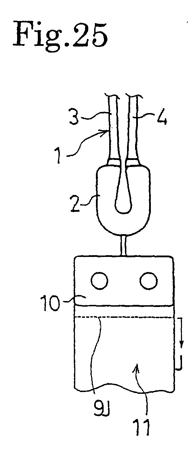

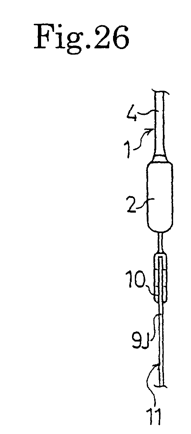

Fig.25 and Fig.26 illustrate the tenth embodiment, in which the threadlike connection part between the bend part 2 and the fixing part 10 can be torn off, and the connection part 9J is provided with small perforations and can be separated along the arrow J.

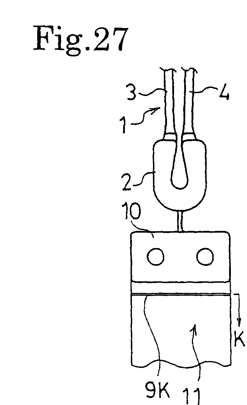

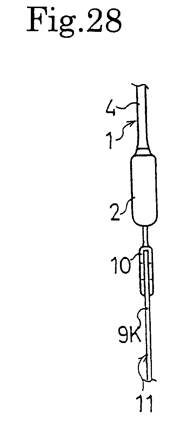

Fig.27 and Fig.28 illustrate the eleventh embodiment, and the tear-off part 9K is made thinner like a groove by pressing one or both sides by a roller, and the IC tag part 11 can be manually torn off at this part.

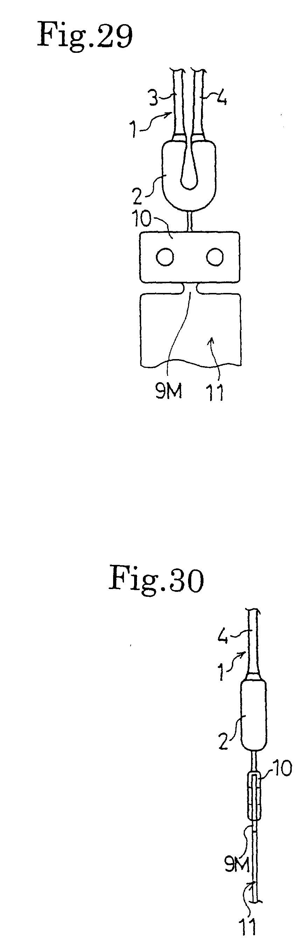

Fig.29 and Fig.30 illustrate the twelfth embodiment, and the IC tag part 11 itself is diminished between the IC tag part 11 and the fixing part 10.

### (Embodiments 13, 14, 15)

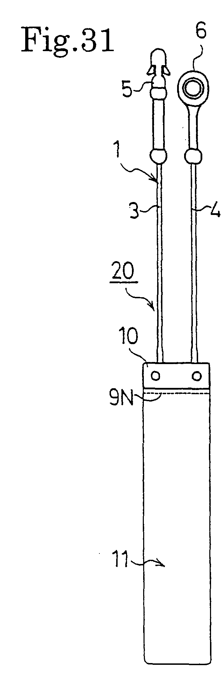

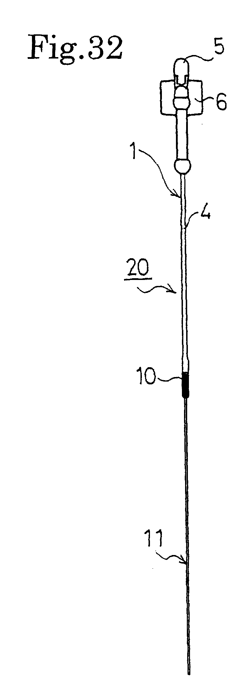

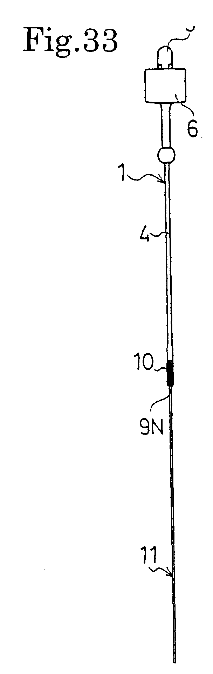

Fig.31 to Fig.33 illustrate the thirteenth embodiment, and two pieces of filament parts 3, 4 are directly connected to the fixing part 10, and in this case, the IC tag part 11 is formed with a perforated connection part 9N.

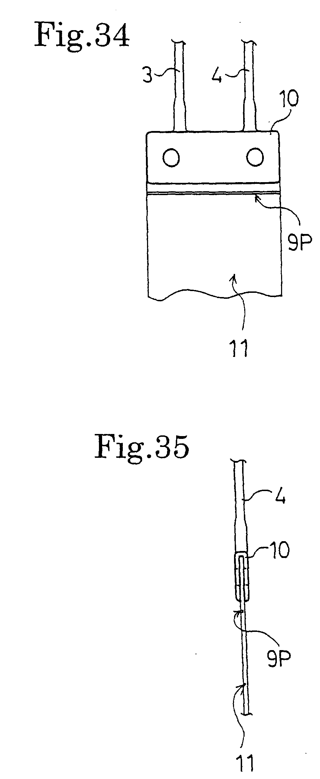

Fig.34 and Fig.35 illustrate the fourteenth embodiment, and the connection part 9P is formed with a roll-processed groove.

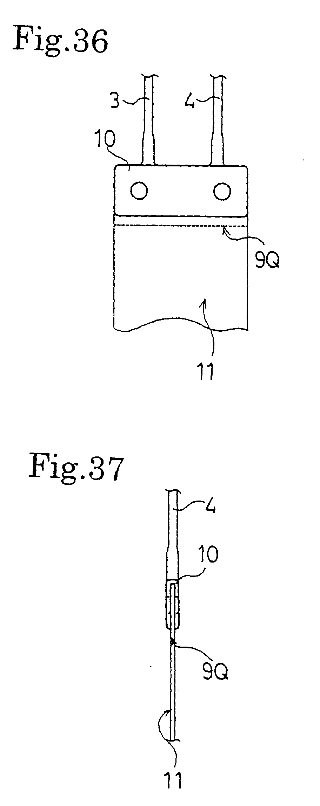

Fig.36 and Fig.37 illustrate the fifteenth embodiment, and the connection part 9Q is formed with perforations.

In the embodiments illustrated in Fig.31 to Fig.37, the fixing part 10 and the two pieces of filaments 3, 4 provide a similar function instead of that of the bend part 2 in the first embodiments illustrated in Fig.1 to Fig.5. Thus, the IC tag with the sealing tool according to the present invention includes various kinds of modifications such as the structure formed with the tear-off connection part between the sealing tool 1 and the fixing part 10 of the IC tag part 11, or the structure formed with the tear-off connection part in the IC tag part 11 itself, or the like.

The dimensions depend on the kinds of sealing tool, but the length from the tip of the male part 5 of the sealing tool 1 up to the bottom face of the bend part 2 is 20 to 160mm. Moreover, the thickness of the connection part 9 of which one end is to be connected to the bend part 2 is about 0.1 to 0.6mm. As already known, since nylon and polypropylene increase its strength and toughness with stretch, they are difficult to tear off, but a part in its original state as molded is relatively brittle and has a weak characteristic against bending and twisting, therefore, this invention effectively utilizes this characteristic.

### (Embodiment 16)

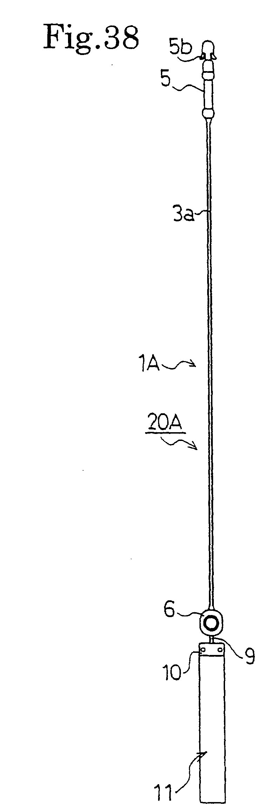

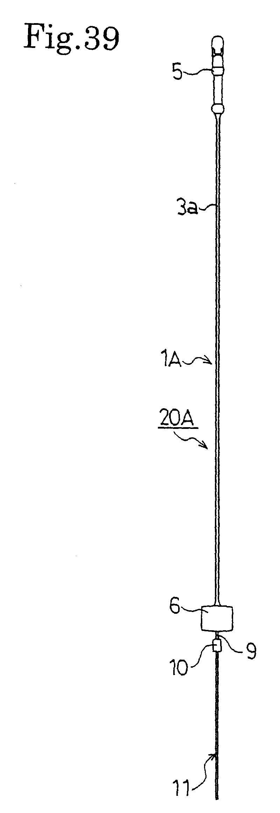

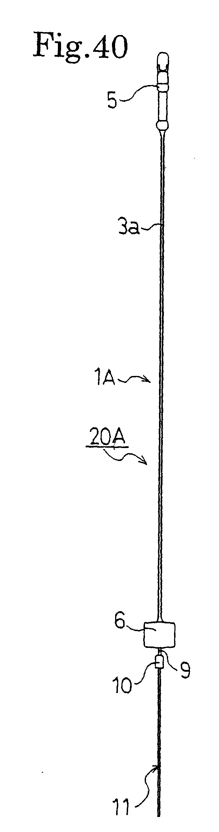

Figs.38 to 42 illustrate the sixteenth embodiment, and Fig.38 illustrates an IC tag 20A with a straight sealing tool in which the fixing part 10 is formed through the connection part 9 to the female part 6 of the sealing tool 1A provided with the male part 5 and the female part 6 at both ends of the straight filament 3a, and the IC tag part 11 is fixed to this fixing part 10.

As for a structure for engaging the male part 5 with the female part 6, the structures mentioned in aforementioned embodiments and various kinds of known structures can be used. And the fixing part 10 is connected to the neighborhood of the female part 6 in one body through the "connection part 9", and the IC tag part 11 embedding therein the IC body (inlet) formed of an IC chip 12a and an antenna 12b as shown in Fig.6 is fixed to this fixing part 10.

Moreover, the fixing part 10 can also employ the various fixing parts mentioned in aforementioned embodiments. Moreover, the IC tag part is also composed of a single-layered or a double-layered sheets of paper or synthetic resin, and the IC body 12 is pasted thereon or embedded therein.

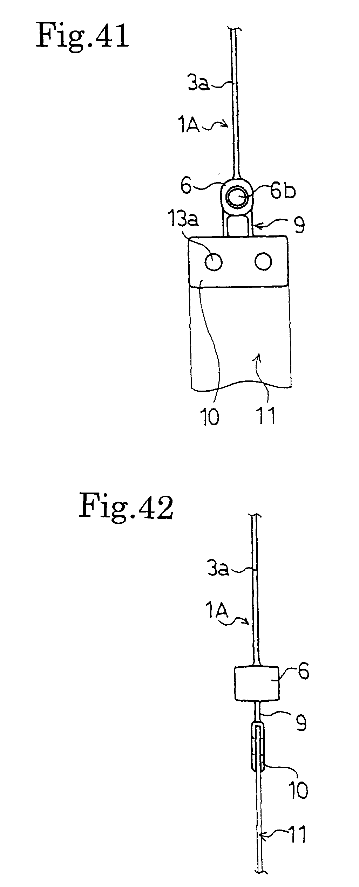

Fig.41 and Fig.42 illustrate an example of the connection part 9 formed in one body between the sealing part 1A and the fixing part 10 in the embodiment 16, and this connection part 9 is formed of a threadlike material, and can easily be manually torn off. Moreover, this connection part 9 can employ the one mentioned in the first embodiment.

To be manually separable means that an ordinary person can easily disconnect the connection part or the sealing tool and the fixing part can be disconnected without using a special tool by twisting off the connection part, twisting and pulling it, folding and twisting it off, folding, twisting and pulling it, plucking it off, or tearing it off, or the like. For this purpose, in the above-mentioned embodiments, the connection part is provided with a strength-reduction processed part reduced in strength compared with the strength of the sealing tool by a notch, perforations, diminish, or non-stretch processing (a part kept in its original state as molded in the cases of nylon, polypropylene, or the like), or the strength of the connection part itself is decreased compared with that of the sealing tool.

In summary of the above-described embodiments, a tag with IC manually separable by twisting off belongs to those having a connection part presented in the embodiments 1 to 9, 12 and 16. Moreover, a tag with IC manually separable by twisting and pulling off belongs to those having the connection part presented in the embodiments 1 to 9, 12, and 16. Further, a tag with IC manually separable by folding belongs to those having the connection part presented in the embodiments 3 to 7 and 10 to 16. Further, a tag with IC manually separable by folding and pulling off belongs to those having the connection part presented in the embodiments 3 to 7 and 10 to 16. Further, a tag with IC manually separable by folding and pulling while twisting belongs to those having the connection part presented in the embodiments 3 to 7 and 10 to 16. Furthermore, a tag with IC manually separable by pulling off belongs to those having the connection part presented in the embodiments 1, 2, 4 to 9, 12 and 16. Further, a tag with IC manually separable by tearing off belongs to those having the connection part presented in the embodiments 10 to 16.

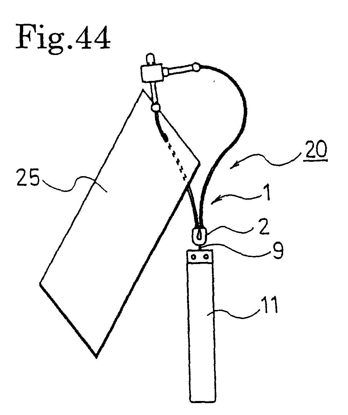

Fig.44 illustrates the state of a combination of a tag for goods 25 and an IC tag 20 with a sealing tool relating to the present invention. For example, when this tag 20 is attached to a white shirt 26, the sealing tool 1 is simply coupled in a ring form to put the article tag 25 on the white shirt 26 by firstly supporting the article tag 25 on the first filament 3 side, inserting this first filament 3 through the buttonhole 27 of the white shirt 26, and then engaging the male part 5 with the female part 6 in the insertion hole 6b, and the white shirt is exhibited on sale as an article. And when a customer purchases this article, the salesperson quickly separate the IC tag part 11 manually at the cash desk and stores it, and the article is passed on to the customer with the tag 25 attached thereto.

## Claims

1. An IC tag with a sealing tool, said sealing tool, integrally molded of synthetic resin, comprising a filament part provided with a male part having an insertion head part at one end part and a female part having an insertion hole to be engaged with the insertion head part at the other end part respectively, **characterized in that** a tag part with an embedded IC chip is connected to said sealing tool through a connection part which can be manually separated.

2. An IC tag with a sealing tool as claimed in claim 1, **characterized in that** the filament is straight and the vicinity of the female part is connected to the connection part.

3. An IC tag with a sealing tool, said sealing tool, integrally molded of synthetic resin, comprising a bend part and two pieces of filament parts of almost the same length extended from both ends of the bend part, said filament parts being provided with a male part having an insertion head part at an end part of one filament part and a female part having an insertion hole to be engaged with the insertion head part at an end part of the other filament part respectively, and further **characterized in that** said IC tag part with an embedded IC chip is connected to the bend part through a connection part which can be manually separated.

4. An IC tag with a sealing tool as claimed in claim 3, **characterized in that** the bend part is shaped like a letter U, V, or a round.

5. An IC tag with a sealing tool as claimed in any of claims 1 to 3, **characterized in that** the connection part can be torn off by twisting action.

6. An IC tag with a sealing tool as claimed in any of claims 1 to 3, **characterized in that** the connection part is formed into one or more threads, and said tag part can be separated by twisting action applied thereto.

7. An IC tag with a sealing tool as claimed in any of claims 1 to 3, **characterized in that** the connection part is formed like a thin plate, and said IC tag part is connected to the connection part so as to be separable.

8. An IC tag with a sealing tool as claimed in any of claims 1 to 3, **characterized in that** a part of the connection part is diminished in cross section, and said IC tag part with an embedded IC can be separated by applying twisting action to this part.
